(19) **Europäisches Patentamt European Patent Office Office européen des brevets**

(11) **EP 1 995 339 B1**

(12) **EUROPEAN PATENT SPECIFICATION**

(45) Date of publication and mention
of the grant of the patent:
**18.10.2017 Bulletin 2017/42**

(51) Int Cl.:
*C22C 38/00* (2006.01)   *C22C 38/14* (2006.01)
*C22C 38/58* (2006.01)   *B23K 35/362* (2006.01)

(21) Application number: **07738512.8**

(86) International application number:
**PCT/JP2007/055041**

(22) Date of filing: **14.03.2007**

(87) International publication number:
**WO 2007/105752 (20.09.2007 Gazette 2007/38)**

(54) **STEEL SHEET FOR SUBMERGED ARC WELDING**

STAHLBLECH FÜR PULVERSCHWEISSEN

TOLE D'ACIER POUR SOUDAGE A L'ARC SOUS FLUX EN POUDRE

(84) Designated Contracting States:
**DE FR GB IT**

(30) Priority: **16.03.2006 JP 2006073150**

(43) Date of publication of application:
**26.11.2008 Bulletin 2008/48**

(73) Proprietor: **Nippon Steel & Sumitomo Metal Corporation**
**Tokyo 100-8071 (JP)**

(72) Inventors:
 • **HAMADA, Masahiko,**
 **c/o SUMITOMO METAL INDUSTRIES, LTD.**
 **Osaka-shi**
 **Osaka 541-0041 (JP)**
 • **KAMO, Takahiro,**
 **c/o SUMITOMO METAL INDUSTRIES, LTD.**
 **Osaka-shi**
 **Osaka 541-0041 (JP)**

 • **OKAGUCHI, Shuji,**
 **c/o SUMITOMO METAL INDUSTRIES, LTD.**
 **Osaka-shi**
 **Osaka 541-0041 (JP)**
 • **TAKAHASHI, Nobuaki,**
 **c/o SUMITOMO METAL INDUSTRIES, LTD.**
 **Osaka-shi**
 **Osaka 541-0041 (JP)**
 • **FUKUBA, Tetsuya,**
 **c/o SUMITOMO METAL INDUSTRIES, LTD.**
 **Osaka-shi**
 **Osaka 541-0041 (JP)**

(74) Representative: **J A Kemp**
 **14 South Square**
 **Gray's Inn**
 **London WC1R 5JJ (GB)**

(56) References cited:
 JP-A- 08 158 006    JP-A- 10 183 295
 JP-A- H09 104 946    JP-A- 2002 256 379
 JP-A- 2005 226 110

**Description**

TECHNICAL FIELD

The present invention relates to a steel plate for submerged arc welding, and more specifically to a steel plate for submerged arc welding suitably applied as a steel pipe base material for a welded steel pipe for use in a pipeline through which petroleum or natural gas is transported.

BACKGROUND ART

There has been a demand for improvement of transport efficiency in a pipeline through which petroleum or natural gas is transported. If the operating pressure is raised, the transport efficiency improves, but the strength of the welded pipes that form the pipeline must be raised in order to thus raise the operating pressure. The strength of the welded pipes can be increased either by improving the strength of the material of the steel pipes itself or by increasing the thickness of the welded pipes.

If the strength is increased by thickening the welded pipes, the following two problems are encountered. Firstly, the thickening of the welded steel pipes causes large heat input during welding the pipes in the manufacture, and this makes the grain structure of the heat affected zone (hereinafter referred to as "HAZ") coarse and thus lowers the toughness of the HAZ. Secondly, the thickening increases the plastic constraint, and this lowers the toughness of the HAZ and the base material. Therefore, when a welded steel pipe is thickened, the toughness of the HAZ and the base material must be improved. For welded steel pipes for use in a pipeline in a cold region in particular, the HAZ and the base material must have even higher toughness at low temperatures.

Furthermore, in the welded steel pipe, not only the base material but also the weld metal must have high toughness. When pipes are welded by submerged arc welding, the dilution ratio of the base material is high. In other words, the steel plate for submerged arc welding also serves as a material for weld metal. Therefore, as a steel plate for submerged arc welding, the HAZ and the base material as well as the weld metal must have high toughness at low temperatures.

One method of improving the HAZ toughness is to control the composition and dispersion of oxide. The method is for example disclosed by Japanese Patent Nos. 3408385 and 3323414. According to the method, the composition and dispersion of oxide in steel are controlled based on specific combinations of deoxidizing elements or methods of introducing them. In this way, austenite grains in the HAZ can be prevented from becoming coarse and the generation of intra-granular ferrite is promoted during cooling, so that the HAZ toughness is improved. When the HAZ toughness is improved by the method in general, the content of Al as a deoxidizing element is limited and Ti as another deoxidizing element is used. This is because Ti forms oxide and allows the above described effect to be provided, while if Al more capable of forming oxide than Ti is contained, oxygen in the steel bonds to Al, and this reduces the quantity of oxygen bonding to Ti.

When however a steel plate produced by the method is formed into a welded steel pipe by submerged arc welding, the Al content in the weld metal is small as the content of Al is reduced in the base material, and this lowers the toughness of the weld metal.

Another method of improving the HAZ toughness different from the above is disclosed by "Development of Technique of Improving Toughness of Large Heat Input HAZ in High Strength Steel," Hatano, et al., Welding Structure Symposium 2002, p. 323 and JP 2004-52104 A. According to the disclosure of the documents, the reduction in the HAZ toughness is caused by the generation of Nb carbonitride and the HAZ toughness can be improved by reducing the Nb content or excluding Nb in the base material. According to the documents, the strength of the base material is restrained from being lowered by containing at least 0.2% (by mass) Mo instead of reducing the Nb content.

However, as for the kinds of steel disclosed by these documents, there is no mention about evaluation of the low temperature toughness of weld metal when submerged arc welding is employed. Therefore, even when the low temperature toughness of the HAZ is high, there is a possibility that the weld metal has poor low temperature toughness if submerged arc welding is employed for welding. The HAZ must have good low temperature toughness not only in the vicinity of a fusion line but also at the boundary with the base material (hereinafter also referred to as "HAZ outer layer part"), but there is no mention about evaluation of both the low temperature toughness in the vicinity of the fusion line and the HAZ outer layer part in these documents. Therefore, it is possible that good low temperature toughness is obtained in the vicinity of the fusion line while the low temperature toughness might be poor in the HAZ outer layer part.

DISCLOSURE OF THE INVENTION

It is an object of the invention to provide a steel plate for submerged arc welding having good low temperature toughness not only at the fusion line vicinity part and the boundary with a base material in the HAZ but also in the base material and weld metal when a pipe is produced by submerged arc welding.

The inventors have made the following findings based on the result of various experiments and examinations.

(a) While reducing the Nb content is effective to improve the HAZ toughness, reducing the Mo and V contents as well as the Nb content is effective as well. This will be described in detail in the following paragraphs.

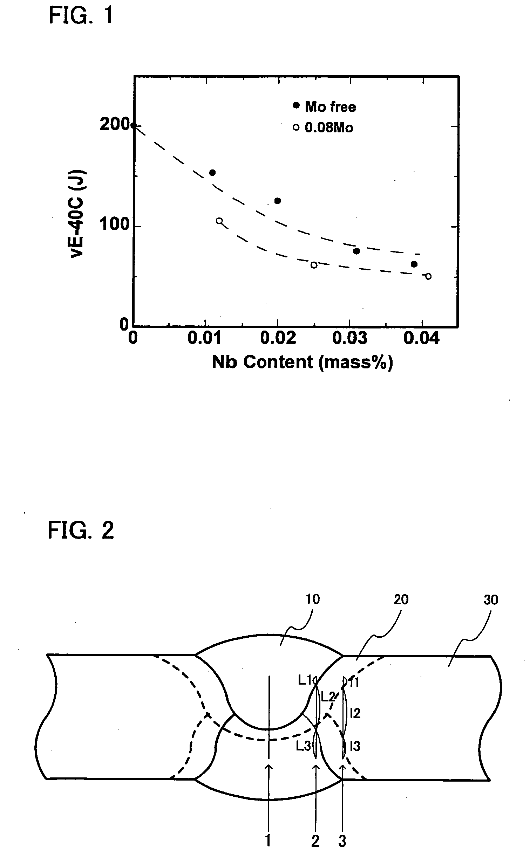

The inventors prepared various kinds of steel plates having different Nb and Mo contents and produced welded joints by submerged arc welding, and then a specimen was each sampled from the HAZ and subjected to a Charpy impact test at -40°C. The result is given in Fig. 1. The ordinate in Fig. 1 represents absorbed energy (J) at -40°C and the abscissa represents the Nb content (% by mass). In the figure, "●" represents the absorbed energy of steel plates free of Mo at test Nos. 2 to 6 in Table 1 that will be described. In the figure, "○" represents the absorbed energy of steel plates containing 0.08% Mo at test Nos. 7 to 9 in Table 1 that will be described. As shown in Fig. 1, the HAZ toughness depended not only on the Nb content but also greatly on the Mo content, and as the contents of these elements were reduced, the absorbed energy was sharply increased. Therefore, by reducing the Nb content as well as the Mo content, the HAZ toughness, the toughness at -40°C or less in particular, can be improved. Since V has the same characteristic as Nb and Mo, the Nb, Mo, and V contents and the total content of these elements should be reduced in order to improve the low temperature toughness of the HAZ.

The following aspects could be the reason why Mb, Mo, and V lower the HAZ toughness.

(i) These elements bond to C and N to produce carbonitride, and the produced carbonitride becomes a fracture origin and lowers the HAZ toughness.

(ii) These elements form solid solutions, which affects the carbon activity and thus affects the generation of carbide and martensite-austenite constituents in the bainite structure. Furthermore, the formation of the solid solutions affects the lath state of the bainite structure.

(b) Based on the above-described examinations, Nb, Mo and V are preferably excluded in order to improve the HAZ toughness. However, among these elements, Nb contributes to improvement of the toughness of the base material. Therefore, Nb is an essential element for obtaining high low temperature toughness at the base material and Mo and V are optional elements.

(c) As in the foregoing, it is considered that the HAZ toughness depends on the total content of Nb, Mo, and V and therefore if Mo and/or V is contained in addition to Nb, the total content must be limited. Therefore, various kinds of steel plates having different total contents for these elements were subjected to Charpy impact tests and measured for the absorbed energy at -40°C. The inventors have then found from the result of measurement that if the following Expression (1) is satisfied, the absorbed energy at -40°C exceeds 100 J and good HAZ toughness is obtained at low temperatures.

$$(Mo/15 + V/3 + Nb/2) \leq 0.015 \qquad (1)$$

where the symbols in Expression (1) represent the contents of the elements (% by mass).

(d) If the Nb content, Mo content, and V content satisfy Expression (1), good HAZ toughness is obtained at a low temperature equal to or lower than -40°C. However, these elements contribute to improvement of the strength of the steel plate, and therefore the strength of the steel plate is lowered if Expression (1) is satisfied. Therefore, according to the invention, Mn, Ni, and Cu are included instead of these elements as elements used to improve the strength of the steel plate, so that the tensile strength of the steel plate is not less than 530 MPa. According to the invention, Mn is an essential element, and Ni and Cu are optional elements. If Ni and/or Cu is included in addition to Mn and the following Expression (2) is satisfied, the tensile strength of the steel plate can be not less than 530 MPa.

$$(Mn/20 + Cu/20 + Ni/60) \geq 0.09 \qquad ...(2)$$

where the symbols in Expression (2) represent the contents of the elements (% by mass).

(e) In order to improve the toughness of a weld metal, Al is contained as an essential element in a steel plate for submerged arc welding as a base material. During welding, Al is supplied from the base material into the weld metal and transforms an oxide-based inclusion into an inclusion more likely to generate acicular ferrite. Acicular ferrite is generated from the inclusion as a nucleus, which improves the toughness of the weld metal.

(f) Boron (B) is limited as an impurity element. In general, B not only improves the strength of the base material but also forms nitride to refine ferrite in the vicinity of the fusion line of HAZ (hereinafter referred to as "fusion line vicinity part") and improves the toughness of the fusion line vicinity part. However, at the HAZ outer layer part heated nearly to the Ac3 point during welding, the B solid solution excessively raises the hardenability and a hardened structure forms, which lowers the toughness. In order to suppress the reduction in toughness at the HAZ outer layer part, the Al content may be limited. If Al that strongly bonds to N is limited, N bonds to B and thus restrains the B solid solution. However, according to the invention, a predetermined amount of Al is necessary for improving the toughness of the weld metal. Therefore, in order to suppress the reduction in toughness at the HAZ outer layer part, B is not added and has its content limited as that of an impurity. Since B is thus limited as an impurity element, improvement of the toughness at the fusion line vicinity part attributable to B is not obtained, but as described above, the toughness at the fusion line vicinity part at low temperatures can be improved by limiting Nb, Mo, and V so that Expression (1) is satisfied.

Based on the foregoing findings, the inventors made the following invention.

A steel plate for submerged arc welding according to the invention contains, by mass, 0.03% to 0.07% C, at most 0.3% Si, 1.5% to 2.5% Mn, 0.005% to 0.025% Nb, 0.005% to 0.02% Ti, 0.01% to 0.06% Al, at most 0.0005% B, 0.001% to 0.008% N, at most 0.015% P, at most 0.015% S, and at most 0.006% O, at least one of at most 0.6% Cu, at most 1.5% Ni, at most 0.04% V, at most 0.08% Mo, and at most 0.5% Cr, optionally at least one of at most 0.005% Ca, at most 0.005% Zr, at most 0.005% Mg, and at most 0.005% Ce, and the balance consists of Fe and impurities, the following Expressions (1) and (2) being satisfied, $(Mo/15+V/3+Nb/2) \leq 0.012$ ...(1) $(Mn/20+Cu/20+Ni/60) \geq 0.10$ ...(2) where the symbols represent the contents of the elements (% by mass).

Note that "0" is substituted in the expressions as the content of an element contained only as an impurity level content among the elements in the expressions.

BRIEF DESCRIPTION OF THE DRAWINGS

Fig. 1 shows the effects of Nb and Mo contents on absorbed energy.
Fig. 2 is a schematic view showing the notch positions of V-notch specimens sampled from a welded joint in an example.

BEST MODE FOR CARRYING OUT THE INVENTION

Now, an embodiment of the invention will be described in detail.

1. Chemical Composition

A steel plate for submerged arc welding according to an embodiment of the invention has the following composition. Hereinafter, "%" related to elements refers to " mass %."

C: 0.03% to 0.07%

Carbon improves the strength of steel. On the other hand, an excessive C content lowers the HAZ toughness and therefore the C content is from 0.03% to 0.07%.

Mn: 1.5% to 2.5%

Manganese deoxidizes steel and improves the strength of the steel. The HAZ toughness is lowered as the strength increases in general, but Mn can suppress the degradation of the HAZ toughness relative to the increase in the strength. On the other hand, an excessive Mn content promotes center segregation and lowers the toughness in the thickness-wise center of the base material. Therefore, the Mn content is from 1.5% to 2.5%. The lower limit for the Mn content is preferably 1.6%, more preferably 1.8%. The upper limit for the Mn content is preferably 2.3%.

Nb: 0.005% to 0.025%

Niobium lowers the HAZ toughness and therefore the Nb content is preferably as small as possible for improving the HAZ toughness. On the other hand, Nb promotes recrystallization during rolling, refines the crystal grains to improve the strength of the base material, and thus improves the toughness of the base material. According to the invention, in order to obtain high strength and high toughness for the base material, Nb is used as an essential element. Therefore, the Nb content is from 0.005% to 0.025%, preferably from 0.005% to 0.020%.

Ti: 0.005% to 0.02%

Titanium forms fine carbonitride and suppresses old austenite crystal grains at HAZ from being coarse. This improves the HAZ toughness. On the other hand, an excessive Ti content lowers the HAZ toughness. Therefore, the Ti content is preferably from 0.005% to 0.02%, preferably from 0.005% to 0.015%.

Al: 0.01% to 0.06%

Aluminum improves the toughness of the weld metal. In order to secure necessary toughness for the weld metal, the balance between the Al content and O (oxygen) content in the weld metal is critical. More specifically, the Al-O ratio (the content ratio of Al/O) is preferably about from 0.4 to 1.0, most optimally 0.7.
During welding, Al in the base material is supplied to the weld metal and transforms an oxide-based inclusion into an inclusion that is more likely to generate acicular ferrite. Acicular ferrite is generated from the inclusion as a nucleus, which improves the toughness of the weld metal. On the other hand, an excessive Al content changes the composition and structure of the oxide, which prevents acicular ferrite from forming. Therefore, the Al content is from 0.01% to 0.06%, preferably from 0.025% to 0.045%.

B: 0.0005% or less

Boron is an impurity according to the invention. Boron not only improves the strength of the base material but also prevents the fusion line vicinity part of HAZ from being coarse and thus improves the toughness. However, Boron causes excessive increase in the hardenability at the HAZ outer layer part heated nearly to the Ac3 point during welding. This hardens the HAZ outer layer part and lowers the toughness of the HAZ outer layer part.
In order to reduce such excessive increase in the hardenability at the HAZ outer layer part, it is effective to cause B to bond to N and reduce the B solid solution and the content of Al that strongly bonds to N should be reduced as much as possible so that B is bonded to N. On the other hand, according to the invention, Al is an essential element for improving the toughness of the weld metal, and therefore the Al content cannot be reduced. Therefore, the content of B as an impurity according to the invention is limited as much as possible and the toughness of the HAZ outer layer part is suppressed from being lowered. More specifically, the B content is not more than 0.0005%.

N: 0.001% to 0.008%

Nitrogen bonds to Ti to form TiN, refines the HAZ structure and thus improves the HAZ toughness. An excessive N content however increases the nitrogen solid solution, which lowers the HAZ toughness. Therefore, the N content is from 0.001% to 0.008%, preferably from 0.001% to 0.006%.
P: 0.015% or less
S: 0.015% or less
O: 0.006% or less
Phosphorus, silicon, and oxygen are impurities. Their contents are preferably as small as possible. More specifically, the P content is not more than 0.015%, the S content is not more than 0.015%, and the O content is not more than 0.006%.
The balance consists of Fe and other impurities.
The steel plate for submerged arc welding according to the invention further has at least one of Cu, Ni, V, Mo, and Cr if necessary. These elements all improve the strength of the steel.
Cu: 0.6% or less
Ni: 1.5% or less
Copper and nitrogen are optional elements. These elements improve the strength of the steel. On the other hand, excessive contents of these elements degrade the quality of slabs. Therefore, the Cu content is not more than 0.6% and the Ni content is not more than 1.5%. The lower limit for the Cu content is preferably 0.1% and the lower limit for the Ni content is preferably 0.1%. However, if their contents are less than the lower limits, the above-described advantage can be obtained to some extent.

V: 0.04% or less

Vanadium is an optional element. Vanadium improves the strength of the base material. On the other hand, V lowers the HAZ toughness as described above. Therefore, even if V is contained for improving the strength, the content should be low. More specifically, the V content is not more than 0.04%, preferably not more than 0.03%. The lower limit for the V content is preferably 0.01%. If the content is less than the lower limit, however, the strength of the base material is improved to some extent.

Mo: 0.08% or less

Molybdenum is an optional element. Molybdenum improves the strength of the base material. On the other hand, Mo lowers the HAZ toughness as described above. Therefore, even if Mo is contained for improving the strength, the content should be low. More specifically, the Mo content is not more than 0.08%, preferably not more than 0.05%. The lower limit for the Mo content is preferably 0.02%, but if the content is less than the lower limit, the strength of the base material is improved to some extent.

Cr: 0.5% or less

Chromium is an optional element. Chromium improves the hardenability and the strength of the base material. However, an excessive Cr content degrades the slab quality. Therefore, the Cr content is not more than 0.5%. The lower limit for the Cr content is preferably 0.1% but if the content is less than the lower limit, the strength of the base material is improved to some extent.

The steel plate for submerged arc welding according to the invention further satisfies the following Expressions (1) and (2).

$$(\mathrm{Mo}/15+\mathrm{V}/3+\mathrm{Nb}/2) \leq 0.012 \qquad \ldots (1)$$

$$(\mathrm{Mn}/20+\mathrm{Cu}/20+\mathrm{Ni}/60) \geq 0.10 \qquad \ldots (2)$$

Regarding Expression (1)

Niobium, molybdenum, and vanadium are all ferrite stabilizing elements and improve the strength of the base material. On the other hand, these elements degrade the HAZ toughness as described above and therefore their contents are limited according to the invention so that the HAZ toughness is prevented from being lowered. More specifically, if the left side of Expression (1) equals $P\alpha$, $P\alpha \leq 0.012\%$. Note that according to the invention, B that contributes to improvement of the toughness of the fusion line vicinity part of HAZ is excluded as an impurity, while the Nb, Mo, and V contents satisfy Expression (1), so that the toughness of the fusion line vicinity part is secured.

Regarding Expression (2)

Manganese, copper, and niobium are all austenite stabilizing elements and improve the strength of the base material as described above. Furthermore, these elements can suppress reduction in the HAZ toughness relative to increase in the strength. Therefore, these elements may be included instead of Nb, Mo, and V so that the strength of the base material is improved and the HAZ toughness is maintained. If the left side of Expression (2) equals $P\gamma$, $P\gamma \geq 0.10\%$.

The steel plate for submerged arc welding according to the invention further contains Si if necessary.

Si: 0.3% or less

Silicon is an optional element. Silicon contributes to deoxidization of the steel. On the other hand, an excessive Si content increases martensite-austenite constituents and thus lowers the HAZ toughness. Therefore, the Si content is not more than 0.3%, preferably not more than 0.2%. The lower limit for the Si content is preferably 0.05%, but if the content is less than the lower limit, the silicon contributes to deoxidization of the steel to some extent.

The steel plate for submerged arc welding according to the invention further contains at least one of Ca, Zr, Mg, and Ce if necessary. These elements all improve the mechanical characteristic of the base material.

Ca: 0.005% or less

Zr: 0.005% or less

Mg: 0.005% or less

Ce: 0.005% or less

Calcium, zirconium, magnesium, and cerium are all optional elements. These elements control the state of inclusions such as sulfide and oxide in the base material, and improves the mechanical characteristic of the base material such as HIC resistance. On the other hand, excessive contents of these elements generate coarse inclusions, which lowers the mechanical characteristic of the base material. Therefore, the upper limit for the content of each of the elements is 0.005%. The lower limit for each of these elements is preferably 0.001%. Note however that if the contents of the elements are each less than the lower limit, the above described advantage can be obtained to some extent.

2. Manufacturing Method

Steel having the above-described composition is melted and refined by a well-known method. The refined molten steel is formed into a slab by a continuous casting process. Alternatively, the molten steel is formed into an ingot by an ingot-making process.

The slab or ingot is subjected to hot working and made into a steel plate for submerged arc welding. At the time, by well-known rolling and hot working processes, the steel plate is formed to have a tensile strength of 530 MPa or more. For example, well known controlled rolling and accelerated cooling processes are employed so that the steel plate is formed to have a tensile strength of 530 MPa or more.

When the strength of the steel plate is to be further increased, the water-cooling stopping temperature is lowered.

By the above-described method, a steel plate for submerged arc welding according to the invention can be produced.

Example 1

Steel plates having the chemical compositions given in Table 1 were produced, subjected to submerged arc welding and then examined for the low temperature toughness of their welded parts.

Table 1

| test No. | chemical compositions (mass %, the balance consisting of Fe and impurities) | | | | | | | | | | | | | | |
|---|---|---|---|---|---|---|---|---|---|---|---|---|---|---|---|
| | C | Si | Mn | Cu | Ni | Cr | Mo | V | Nb | Ti | B | Al | N | P$\gamma$ | P$\alpha$ |
| 1 | 0.06 | 0.10 | 1.55 | 0.28 | 0.43 | 0.18 | - | <u>0.035</u> | 0.010 | 0.018 | - | 0.035 | 0.0034 | <u>0.099</u> | <u>0.017</u> |
| 2 | 0.06 | 0.10 | 1.64 | 0.25 | 0.40 | - | - | - | <u>0.039</u> | 0.013 | - | 0.034 | 0.0028 | 0.101 | <u>0.020</u> |
| 3 | 0.06 | 0.10 | 1.66 | 0.25 | 0.41 | - | - | - | 0.031 | 0.013 | - | 0.036 | 0.0031 | 0.102 | 0.016 |
| 4 | 0.06 | 0.10 | 1.66 | 0.25 | 0.41 | - | - | - | 0.020 | 0.013 | - | 0.036 | 0.0031 | 0.102 | 0.010 |
| 5 | 0.06 | 0.10 | 1.65 | 0.25 | 0.40 | - | - | - | 0.011 | 0.013 | - | 0.035 | 0.0033 | 0.102 | 0.006 |
| 6 | 0.06 | 0.10 | 1.64 | 0.25 | 0.40 | - | - | - | <u>-</u> | 0.013 | - | 0.034 | 0.0028 | 0.101 | 0 |
| 7 | 0.06 | 0.11 | 1.64 | 0.26 | 0.40 | - | 0.08 | - | <u>0.041</u> | 0.013 | - | 0.033 | 0.0029 | 0.102 | <u>0.026</u> |
| 8 | 0.06 | 0.12 | 1.64 | 0.26 | 0.39 | - | 0.08 | - | 0.025 | 0.013 | - | 0.036 | 0.0032 | 0.102 | <u>0.018</u> |
| 9 | 0.06 | 0.12 | 1.63 | 0.26 | 0.39 | - | 0.08 | - | 0.012 | 0.012 | - | 0.034 | 0.0031 | 0.101 | 0.011 |
| 10 | 0.06 | 0.12 | 1.64 | 0.26 | 0.39 | - | 0.03 | 0.020 | 0.020 | 0.013 | - | 0.036 | 0.0032 | 0.102 | <u>0.019</u> |
| 11 | 0.06 | 0.12 | 1.63 | 0.26 | 0.40 | - | - | - | 0.012 | 0.012 | - | <u>0.011</u> | 0.0031 | 0.101 | 0.006 |
| 12 | 0.06 | 0.11 | 1.65 | 0.25 | 0.42 | - | - | - | 0.012 | 0.012 | <u>0.0013</u> | 0.025 | 0.0031 | 0.102 | 0.006 |
| 13 | 0.06 | 0.13 | 1.66 | 0.25 | 0.42 | - | - | - | 0.012 | 0.012 | <u>0.0008</u> | <u>0.011</u> | 0.0031 | 0.103 | 0.006 |
| 14 | 0.06 | 0.05 | <u>1.40</u> | 0.40 | 0.65 | 0.30 | 0.06 | - | 0.020 | 0.015 | - | 0.030 | 0.0034 | 0.101 | <u>0.014</u> |
| 15 | <u>0.11</u> | 0.10 | 1.65 | 0.20 | 0.30 | - | - | - | 0.011 | 0.013 | - | 0.035 | 0.0033 | <u>0.098</u> | 0.006 |
| 16 | <u>0.08</u> | 0.12 | 1.65 | - | - | - | 0.05 | - | 0.012 | 0.012 | - | 0.034 | 0.0031 | <u>0.083</u> | 0.009 |
| 17 | 0.06 | 0.15 | 1.90 | 0.30 | 0.55 | 0.15 | <u>0.10</u> | - | 0.016 | 0.013 | - | 0.035 | 0.0027 | 0.119 | <u>0.015</u> |
| 18 | 0.06 | 0.15 | 1.90 | 0.40 | 0.65 | 0.20 | - | - | 0.018 | 0.013 | - | 0.035 | 0.0045 | 0.126 | 0.009 |
| 19 | 0.06 | 0.15 | 1.90 | 0.40 | 0.65 | 0.20 | - | - | 0.023 | 0.013 | - | 0.035 | 0.0035 | 0.126 | 0.012 |
| 20 | 0.06 | 0.15 | 1.90 | 0.40 | 0.65 | 0.20 | - | - | <u>0.028</u> | 0.013 | - | 0.035 | 0.0044 | 0.126 | <u>0.014</u> |
| 21 | 0.05 | 0.05 | 2.20 | 0.50 | 0.80 | - | - | - | 0.015 | 0.012 | - | 0.020 | 0.0022 | 0.148 | 0.008 |
| 22 | 0.05 | 0.05 | 2.40 | 0.50 | 0.80 | - | - | - | 0.020 | 0.012 | - | 0.020 | 0.0023 | 0.158 | 0.010 |

Underlined values are outside the ranges defined by the invention.
P$\alpha$ =(Mo/15+V/3+Nb/2) P$\gamma$ =(Mn/20+Cu/20+Ni/60)

Steel materials having chemical compositions given in Table 1 were prepared. The P content, S content, and O content of those at all the test numbers were within the ranges defined by the invention. The prepared steel materials were melted in a small vacuum melting furnace with a capacity of 150 kg and cast into ingots. The ingots were heated for two hours at 1150°C and then each forged into a billet having a height of 150 mm, a width of 130 mm, and a length of 130 mm. The temperature of the material during forging was from 900°C to 1150°C. The billets were heated at 1100°C and then rolled into steel plates. By the rolling, the steel plates at test Nos. 1 to 16 were each formed to have a thickness of 35 mm, those at test Nos. 17 to 20 were formed to have a thickness of 32 mm, and those at test Nos. 21 and 22 were formed to have a thickness of 27 mm. The temperature of the materials at the finishing rolling was about 780°C.

After the rolling, the steel plates were cooled with water. The water cooling starting temperature was $750 \pm 30$°C. The water cooling stopping temperature was $500 \pm 30$°C.

Examination of Base Material for Strength and Toughness

In order to examine the strength of the base materials, a No. 10 specimen specified by JISZ2201 was sampled from the thickness-wise center of each of the steel plates in the direction orthogonal to the rolling direction. The sampled specimens were subjected to tensile tests at normal temperatures to measure the tensile strength of each of the steel plates.

Furthermore, in order to examine the toughness of the base materials, a V notch specimen specified by JISZ2202 was sampled from each of the steel plates in the direction orthogonal to the rolling direction. The sampled specimens were subjected to Charpy impact tests, and the fracture appearance transition temperatures of the steel plates were measured.

Examination of Toughness of Welded Part

In a simulation of seam welding of a large size steel pipe, the steel plates at the test numbers were subjected to submerged arc welding. Two pieces were each taken from the steel plates at the test numbers and the side surfaces of the prepared steel plates were joined end to end and one layer each from the upper surface and the lower surface was subjected to submerged arc welding. The first layer welding corresponding to the inner surface welding in actual seam welding was carried out with three electrodes (DC-AC-AC), and the second layer welding corresponding to the outer layer welding in the actual seam welding was carried out with four electrodes (DC-AC-AC-AC).

The welding heat input was changed depending on the plate thickness. More specifically, the welding heat input to the steel plates having a thickness of 35 mm (test Nos. 1 to 16) was 9.1 kJ/mm, the welding heat input to the steel plates having a thickness of 32 mm (test Nos. 17 to 20) was 8.0 kJ/mm, and the welding heat input to the steel plates having a thickness of 27 mm (test Nos. 21 and 22) was 5.5 kJ/mm.

For the submerged arc welding, welding wire products W80 and W36 having a diameter of 4 inm manufactured by Nippon Steel & Sumikin Welding Co., Ltd. were used. The AWS and JIS standards for each of the welding wire products are given in Table 2. In the three-electrode submerged arc welding, the wires corresponding to the three electrodes were W80, W36, and W36, while in the four-electrode submerged arc welding, the wires corresponding to the electrodes were W80, W80, W36, and W36. Fused flux having a chemical composition as given in Table 3 was used for the submerged arc welding.

Table 2

|  | AWS standards | JIS standards |
|---|---|---|
| W80 | A5.23/EG | Z3351 YS-NCM4 |
| W36 | A5.17/EH14 | Z3351 YS-S6 |

Table 3

| chemical composition (unit: mass %) | | | | | | | |
|---|---|---|---|---|---|---|---|
| $SiO_2$ | MnO | CaO | $CaF_2$ | $Al_2O_3$ | $TiO_2$ | BaO | others |
| 20 | 4 | 15 | 40 | 8 | 4 | 3 | 6 |

A plurality of Charpy impact test specimens specified by JISZ2202 were sampled from the welded parts of the welded joints produced by submerged arc welding. More specifically, as shown in Fig. 2, six specimens having a notch positioned in the center of the weld metal 10 (denoted by 1 in the figure and hereinafter referred to as "WM specimens"), six specimens having a notch positioned in the vicinity of the fusion line (denoted by 2 in the figure and hereinafter referred to as "T-HAZ specimens"), and six specimens having a notch positioned at the HAZ outer layer (denoted by 3 in the figure and hereinafter referred to as "V-HAZ specimens") were sampled. In this example, the fusion line vicinity part is in the position where the ratio of the weld metal 10 and the HAZ 20 is 1:1 (L1+L3≅L2 in the figure). The HAZ outer layer part is in the position where the ratio of the base material 30 and the HAZ 20 is 1:1 (l1+l3≅l2 in the figure).

The specimens (WM, T-HAZ, and V-HAZ specimens) were each subjected to a Charpy impact test at -40°C based on JISZ2242 and their absorbed energy was obtained. According to WES2805, the toughness at the weld metal and the HAZ (the fusion line vicinity part and the HAZ outer layer part) were evaluated based on the second smallest absorbed energy among the six absorbed energy values obtained by the tests. When the second smallest absorbed energy was 100 J or more, it was determined that good toughness was secured.

Examination Result

The result of examination is given in Table 4.

Table 4

| test No. | plate thickness (mm) | characteristic of base material | | | toughness characteristic of welded part | | |
|---|---|---|---|---|---|---|---|
| | | YS (MPa) | TS (MPa) | VTs (°C) | T-HAZ | V-HAZ | WM |
| 1 | 35 | 511 | 596 | -110 | × | ○ | ○ |
| 2 | 35 | 499 | 583 | -121 | × | ○ | ○ |
| 3 | 35 | 465 | 561 | -125 | × | ○ | ○ |
| 4 | 35 | 462 | 540 | -110 | ○ | ○ | ○ |
| 5 | 35 | 450 | 536 | -125 | ○ | ○ | ○ |
| 6 | 35 | 430 | 510 | -85 | ○ | ○ | ○ |
| 7 | 35 | 497 | 591 | -106 | × | ○ | ○ |
| 8 | 35 | 494 | 590 | -100 | × | ○ | ○ |
| 9 | 35 | 487 | 594 | -105 | ○ | ○ | ○ |
| 10 | 35 | 480 | 553 | -115 | × | ○ | ○ |
| 11 | 35 | 492 | 593 | -110 | ○ | ○ | × |
| . 12 | 35 | 511 | 594 | -105 | ○ | × | ○ |
| 13 | 35 | 505 | 585 | -110 | ○ | ○ | × |
| 14 | 35 | 530 | 621 | -110 | × | ○ | ○ |
| 15 | 35 | 493 | 587 | -90 | × | ○ | ○ |
| 16 | 35 | 440 | 550 | -105 | × | ○ | ○ |
| 17 | 32 | 614 | 698 | -105 | × | ○ | ○ |
| 18 | 32 | 631 | 684 | -110 | ○ | ○ | ○ |
| 19 | 32 | 611 | 663 | -115 | ○ | ○ | ○ |
| 20 | 32 | 651 | 719 | -120 | × | ○ | ○ |
| 21 | 27 | 703 | 780 | -100 | ○ | ○ | ○ |
| 22 | 27 | 720 | 804 | -105 | ○ | ○ | ○ |

In Table 4, "YS" is the yield stress (MPa) of the base material, and "TS" is the tensile strength (MPa) of the base material. In addition, "vTs" is the fracture appearance transition temperature (°C) of the base material. In the columns of "T-HAZ," "V-HAZ," and "WM," the result of toughness evaluation based on Charpy impact tests at -40°C carried out to the corresponding specimens are indicated. In the table, "○" indicates that the absorbed energy was not less than 100 J and the toughness was good while "×" indicates that the absorbed energy was less than 100 J and the toughness was poor.

With reference to Tables 1 and 2, the chemical compositions and the values Pα and Pγ of the steel plates at test Nos. 4, 5, 9, 18, 19, 21, and 22 were within the ranges defined by the invention. Therefore, the tensile strength of each of these steel plates (base materials) was not less than 530 MPa. The fracture appearance transition temperature was not more than -100°C and high base material toughness was secured. The absorbed energy values of the WM specimen, the T-HAZ specimen and the V-HAZ specimen all exceeded 100 J and good toughness was exhibited at any of the weld metal, the fusion line vicinity part and the HAZ outer layer part.

Meanwhile, in the steel plate at test No. 1, the total content of V and Nb was large, and Pα was outside the range defined by the invention. Therefore, the absorbed energy of the HAZ specimen was less than 100 J. The steel plates at test Nos. 2, 3, 7, and 20 each had a Nb content exceeding the upper limit defined by the invention. Therefore, the absorbed energy of the T-HAZ specimen was less than 100 J.

The steel plate at test No. 6 had a Nb content less than the lower limit defined by the invention. Therefore, the fracture appearance transition temperature of the steel plate was not less than -100°C, and the base material toughness was low. The tensile strength was less than 530 MPa.

The steel plates at test Nos. 8 and 10 each had Nb, Mo, and V contents within the ranges defined by the invention, but their Pα values were outside the range defined by the invention. Therefore, the absorbed energy of the T-HAZ specimen was less than 100 J.

The steel plate at test No. 11 contained the elements other than Al almost equivalently to the steel plate at test No. 5 but its Al content was less than the lower limit defined by the invention. Therefore, the absorbed energy of the WM specimen was less than 100 J and the toughness of the weld metal was low.

The steel plate at test No. 12 has a B content exceeding the upper limit defined by the invention. Therefore, the absorbed energy of the V-HAZ specimen was less than 100 J and the heat affected zone had low toughness.

The steel plate at test No. 13 had a B content exceeding the upper limit defined by the invention, while the Al content was less than the lower limit defined by the invention, and the absorbed energy of the V-HAZ specimen exceeded 100 J. However, since the Al content is small, the absorbed energy of the WM specimen was less than 100 J and the toughness of the weld metal was low.

The steel plate at test No. 14 had a Mn content less than the lower limit defined by the invention. Therefore, the absorbed energy of the T-HAZ specimen was less than 100 J. The steel plate at test No. 15 had a C content exceeding the upper limit defined by the invention. Therefore, the absorbed energy of the T-HAZ specimen was less than 100 J.

The steel plate at test No. 16 had Pγ outside the range defined by the invention. Therefore, the HAZ toughness cannot be prevented from being reduced relative to increase in the strength, and the absorbed energy of the T-HAZ specimen was less than 100 J.

The steel plate at test No. 17 had Pα outside the range defined by the invention and the Mo content exceeded the upper limit defined by the invention. Therefore, the absorbed energy of the T-HAZ specimen was less than 100 J.

Although the embodiment of the present invention has been described, the same is by way of illustration and example only and therefore the invention is not limited by the above-described embodiment. The invention may be embodied in various modified forms without departing from the scope of the claims.

INDUSTRIAL APPLICABILITY

The steel plate for submerged arc welding according to the invention is widely applicable as a base material for a welded steel pipe, and particularly applicable as a base material for an UOE large diameter pipe for use in a pipeline or the like.

**Claims**

**1.** A steel plate for submerged arc welding consisting of, by mass, 0.03% to 0.07%C, at most 0.3% Si, 1.5% to 2.5% Mn, 0.005% to 0.025% Nb, 0.005% to 0.02% Ti, 0.01% to 0.06% Al, at most 0.0005% B, 0.001% to 0.008% N, at most 0.015% P, at most 0.015% S, and at most 0.006% O,
at least one of at most 0.6% Cu, at most 1.5% Ni, at most 0.04% V, at most 0.08% Mo, and at most 0.5% Cr,
optionally at least one of at most 0.005% Ca, at most 0.005% Zr, at most 0.005% Mg, and at most 0.005% Ce,
the balance consisting of Fe and impurities
the following Expressions (1) and (2) being satisfied,

$$(Mo/15+V/3+Nb/2) \leq 0.012 \qquad ...(1)$$

$$(Mn/20+Cu/20+Ni/60) \geq 0.10 \qquad ...(2)$$

where the symbols represent the contents of the elements (% by mass).

**Patentansprüche**

1. Stahlblech für Pulverschweißen, bestehend aus, nach Masse, 0,03 % bis 0,07 % C, höchstens 0,3 % Si, 1,5 % bis 2,5 % Mn, 0,005 % bis 0,025 % Nb, 0,005 % bis 0,02 % Ti, 0,01 % bis 0,06 % Al, höchstens 0,0005 % B, 0,001 % bis 0,008 % N, höchstens 0,015 % P, höchstens 0,015 % S und höchstens 0,006 % O,
mindestens einem aus höchstens 0,6 % Cu, höchstens 1,5 % Ni, höchstens 0,04 % V, höchstens 0,08 % Mo und höchstens 0,5 % Cr,
optional mindestens einem aus höchstens 0,005 % Ca, höchstens 0,005 % Zr, höchstens 0,005 % Mg und höchstens 0,005 % Ce,
wobei der Rest aus Fe und Unreinheiten besteht
die folgenden Ausdrücke (1) und (2) erfüllt sind,

$$(Mo/15+V/3+Nb/2) \leq 0,012 \qquad ...(1)$$

$$(Mn/20+Cu/20+Ni/60) \geq 0,10 \qquad ...(2)$$

wobei die Symbole den Gehalt der Elemente (Massen-%) darstellen.

**Revendications**

1. Tôle d'acier pour soudage à l'arc submergé constitué de, en masse, 0,03 % à 0,07 % de C, au plus 0,3 % de Si, 1,5 % à 2,5 % de Mn, 0,005 % à 0,025 % de Nb, 0,005 % à 0,02 % de Ti, 0,01 % à 0,06 % d'Al, au plus 0,0005 % de B, 0,001 % à 0,008 % de N, au plus 0,015 % de P, au plus 0,015 % de S et au plus 0,006 % d'O,
au moins un des éléments suivants : au plus 0,6 % de Cu, au plus 1,5 % de Ni, au plus 0,04 % de V, au plus 0,08 % de Mo et au plus 0,5 % de Cr,
éventuellement au moins un des éléments suivants : au plus 0,005 % de Ca, au plus 0,005 % de Zr, au plus 0,005 % de Mg et au plus 0,005 % de Ce,
le reste étant composé de Fe et d'impuretés
les expressions suivantes (1) et (2) étant vérifiées

$$(Mo/15+V/3+Nb/2) \leq 0,012 \qquad ... (1)$$

$$(Mn/20+Cu/20+Ni/60) \geq 0,10 \qquad ... (2)$$

où les symboles représentent la teneur en éléments (% en masse).

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3408385 B
- JP 3323414 B
- JP 2004052104 A

**Non-patent literature cited in the description**

- **HATANO et al.** Development of Technique of Improving Toughness of Large Heat Input HAZ in High Strength Steel. *Welding Structure Symposium,* 2002, 323